Europäisches Patentamt

European Patent Office

Office européen des brevets

(19)

(11) **EP 0 628 172 B1**

(12) **FASCICULE DE BREVET EUROPEEN**

(45) Date de publication et mention
de la délivrance du brevet:
**11.12.1996 Bulletin 1996/50**

(21) Numéro de dépôt: **93905391.4**

(22) Date de dépôt: **12.02.1993**

(51) Int Cl.⁶: **G01S 15/89**

(86) Numéro de dépôt international:
**PCT/FR93/00149**

(87) Numéro de publication internationale:
**WO 93/17353 (02.09.1993 Gazette 1993/21)**

(54) **PROCEDE DE STABILISATION ET DE FORMATION DE VOIES POUR SONAR ET SONAR POUR SA MISE EN OEUVRE**

Verfahren zur Strahlstabilisierung und Strahlbündelung und Sonar zu dessen Anwendung

METHOD FOR STABILIZING AND FORMING CHANNELS FOR SONAR, AND SONAR USED TO IMPLEMENT SUCH METHOD

(84) Etats contractants désignés:
**DE GB IT**

(30) Priorité: **28.02.1992 FR 9202368**

(43) Date de publication de la demande:
**14.12.1994 Bulletin 1994/50**

(73) Titulaire: **THOMSON-CSF**
**75008 Paris (FR)**

(72) Inventeurs:
• **BILLON, Didier**
**F-92402 Courbevoie Cédex (FR)**
• **GUTHMANN, Pierre**
**F-92402 Courbevoie Cédex (FR)**
• **VIEZ, Francis**
**F-92402 Courbevoie Cédex (FR)**

(74) Mandataire: **Lincot, Georges et al**
**THOMSON-CSF,**
**SCPI,**
**B.P. 329,**
**50, rue Jean-Pierre Timbaud**
**92402 Courbevoie Cédex (FR)**

(56) Documents cités:
**FR-A- 2 273 287**      **US-A- 4 244 036**

## Description

L'invention se rapporte aux sonars latéraux généralement utilisés comme sonars de surveillance des chenaux de navigation visant à assurer la sécurité des gros bâtiments de guerre et a plus particulièrement pour objet un procédé de stabilisation et de formation de voies pour sonar et un sonar pour sa mise en oeuvre.

Dans une application particulière où le sonar est porté par un poisson remorqué par un bâtiment de surface, une observation du fond marin est effectuée latéralement, de part et d'autre du plan vertical passant par l'axe longitudinal du poisson et le balayage du volume observé est obtenu par le déplacement du bâtiment de surface remorqueur. Les informations recueillies par le sonar permettent la restitution du fond marin observé sous forme d'une succession d'images vidéo.

Le sonar latéral comporte une antenne émission et une antenne réception. La longueur de l'antenne émission est choisie pour obtenir une largeur de champ d'une image à peu près constante quelle que soit la distance oblique, en émettant en champ proche dans la zone de Fresnel.

La longueur de l'antenne réception doit être variable pour obtenir sur toute la longueur de la zone insonifiée par l'antenne émission, une résolution constante quelles que soient la vitesse de navigation du poisson et la durée de la période de récurrence, entre deux émissions successives. Pour cela, l'antenne de réception comporte des capteurs qui sont commutés de manière à constituer une antenne à ouverture (ou pupille) variable et est focalisée sur chaque bande de terrain "découpée" dans le volume observé pour des distances obliques successives.

La restitution du fond marin observé est constituée d'une séquence d'images. Chaque image résulte de la juxtaposition de bandes de terrain du fond marin "découpées" dans le volume observé pendant une période de récurrence. Ces bandes de terrain correspondent aux voies formées en réception par le sonar et peuvent être orthogonales ou inclinées par rapport à l'axe longitudinal du poisson et c'est la largeur totale des bandes qui délimite la largeur du champ de l'image pendant la période de récurrence. Pour que la restitution du fond marin observé soit la plus fidèle possible, il faut que les bandes de terrain successives soient jointives pendant la période de récurrence et d'une récurrence à l'autre quels que soient les mouvements auxquels est soumis le poisson.

Pendant sa navigation le poisson est soumis principalement à des mouvements de tangage et de lacet qui risquent de dégrader la qualité de la restitution du fond marin observé. Les mouvements de rotation du poisson, donc des antennes émission et réception, entre l'instant d'émission et l'instant de réception peuvent nuire à la juxtaposition des bandes de terrain observées entre deux périodes de récurrence successives, ce qui se traduit par des trous de couverture ou des superpositions d'images dans la séquence d'images successives du fond marin observé. Afin de s'affranchir des effets de ces mouvements, une solution généralement adoptée consiste à stabiliser électroniquement l'antenne de réception du sonar, pour compenser les mouvements de rotation du poisson entre l'instant d'émission et l'instant de réception. Pour cela, des déphasages sont appliqués aux signaux reçus par les capteurs de l'antenne réception avant la formation des voies. Des méthodes de correction des déphasages dûs aux mouvements de rotation du poisson sont notamment décrites dans les brevets FR-A-2 279 287 de WESTINGHOUSE et US-A-4 244 036 de RAVEN.

La dissociation des fonctions stabilisation et formation des voies a l'avantage de limiter au nombre de capteurs le nombre de coefficients complexes à calculer en temps réel pour stabiliser l'image.

Outre les mouvements de rotation du poisson, les variations de la vitesse de navigation font également varier la largeur du champ de l'image. Cette variation peut être supérieure au pas prédéterminé entre voies créant ainsi un trou de couverture.

Pour éviter ce trou de couverture, il faut adapter le nombre de voies à la largeur du champ de l'image compris entre un maximum fixé par le "pire-cas" défini par les conditions les plus défavorables de navigation, soit pour le champ d'image le plus large, et un minimum qui est le champ nécessaire dans le cas où le poisson n'est soumis à aucun mouvement de rotation.

Pour conserver un processus de traitement simple, une solution connue consiste à calculer systématiquement le nombre maximum de voies correspondant à l'hypothèse du pire cas où le champ est le plus large, et à n'écrire dans la mémoire d'image que les voies nécessaires à la couverture du champ. Il s'ensuit un recouvrement des bandes formées lors des récurrences successives.

Cette solution a quelques inconvénients :

- le nombre de voies écrites dans la mémoire en sortie du processeur de traitement peut varier non seulement d'une récurrence à l'autre mais aussi dans la même récurrence suivant la distance oblique ; ceci est très contraignant en ce qui concerne la gestion de cette mémoire ;

- afin que deux images successives se raccordent correctement, l'axe de stabilisation est positionné dans une plage centrée sur l'axe d'émission et dont la largeur est égale au pas entre voies ; aux instants de réactualisation de la stabilisation, le déplacement de l'axe de stabilisation peut atteindre le pas entre voies, ce qui introduit sur les signaux des capteurs des sauts de phase préjudiciables au traitement cohérent effectué ultérieurement ;

- cette stabilisation fait appel à une référence absolue qui est la direction d'émission de la première récurrence ; au fur et à mesure que, du fait de la rotation du poisson, l'axe de l'antenne s'éloigne de cette direction, les distorsions de l'image aux distances de réactualisation de la stabilisation s'aggravent.

Le but de l'invention est le développement d'un procédé de stabilisation et de formation des voies d'un sonar latéral multivoies permettant d'éviter les inconvénients des solutions précédentes.

L'invention a pour objet un procédé de stabilisation et de formation de voies d'un sonar latéral multivoies, où chaque voie est stabilisée indépendamment des autres, couvrant le champ d'une image avec un nombre constant N de voies ayant un pas variable s'il y a lieu d'une image à l'autre en utilisant toutes les voies formées par le processeur de traitement issues du "suréchantillonnage spatial" pour un meilleur échantillonnage du terrain permettant d'assurer la juxtaposition des images successives tout en tenant compte des mouvements du poisson, et un sonar latéral pour la mise en oeuvre du procédé selon l'invention.

Selon l'invention, un procédé de stabilisation et de formation de voies d'un sonar multivoies comportant au moins un système de surveillance du fond marin fixé sur un porteur, le système comportant en outre une antenne émission insonifiant un volume du fond marin utilisée en champ proche dans la zone de Fresnel, et comportant une antenne réception à ouverture variable formant des voies i jointives, est caractérisé en ce qu'il consiste pour couvrir le fond marin observé par une séquence d'images de zones d'observation quasi-jointives sur le fond, à former en réception un nombre N préfixé constant de voies i, ayant un pas $\delta$ variable d'une récurrence à l'autre en fonction des paramètres de navigation du porteur et en ce qu'il consiste pour chaque récurrence :

- dans une première étape, à évaluer le déplacement L(n) de la zone d'observation du fond pour une récurrence en cours (n) en fonction du déplacement et de la position du porteur par rapport à la zone d'observation entre l'émission précédente E(n-1) et l'émission en cours E(n),
- dans une seconde étape, à déterminer le pas $\delta_{(n)}$ entre voies i pour la récurrence en cours (n) à partir du nombre N préfixé de voies i, du déplacement L(n) évalué dans la première étape et du pas $\delta_{(n-1)}$ entre voies i de la récurrence précédente (n-1), et
- dans une troisième étape, à repointer en temps réel la direction de l'axe réception sur la direction de l'axe émission de la récurrence en cours (n) et, à partir de cette direction, à former successivement les N voies i de réception dépointées de largeur $\delta_{(n)}$ pour couvrir le champ de l'image de la récurrence en cours (n).

L'invention sera mieux comprise et d'autres caractéristiques apparaîtront à l'aide de la description qui suit en référence aux figures annexées.

- La figure 1 est une vue schématique d'une observation sous-marine par un sonar latéral selon l'invention ;
- La figure 2 montre une vue de dessus de l'observation sous-marine illustrée par la figure 1 pour un exemple de mode de réalisation de l'invention ;
- La figure 3 donne un bloc diagramme des trois étapes du procédé selon l'invention ;
- La figure 4 illustre les deux premières étapes du procédé selon l'invention ;
- Les figures 5 et 6 sont des réponses à des sauts de la largeur du champ d'une image ;
- La figure 7 est un tableau relatif aux figures 5 et 6 ;
- La figure 8 illustre la troisième et dernière étape du procédé selon l'invention.

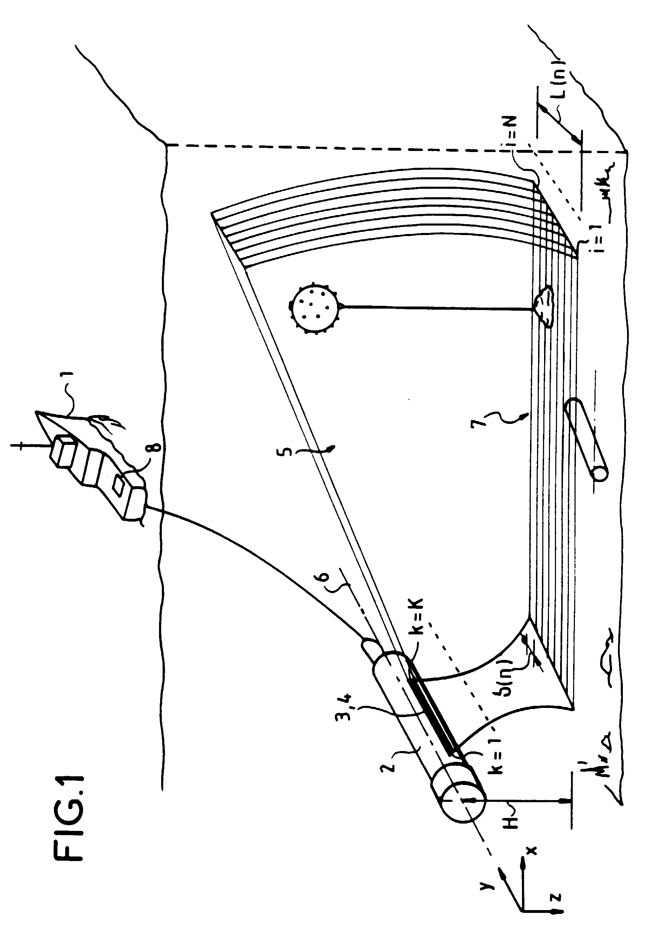

La figure 1 montre un mode particulier de réalisation de l'invention où un bâtiment de surface 1 remorque un poisson 2 de forme cylindrique dans lequel est installé un système d'observation sur tribord 3 et 4. Ce système d'observation 3 et 4 comporte une antenne linéaire d'émission 3 et une antenne linéaire de réception 4 ayant la même longueur. Dans ce mode de réalisation, elles sont toutes les deux placées sur une même génératrice du poisson cylindrique 2. H est l'altitude du poisson par rapport au fond.

L'antenne d'émission 3 insonifie un volume 5 du milieu marin dans un repère orthonormé (x, y, z) et l'antenne de réception 4 comportant K capteurs k forme N voies i, définies par leur axe de symétrie et leur largeur $\delta$, délimitant des bandes de terrain transversales par rapport à l'axe longitudinal 6 suivant y du poisson 2, sur une zone d'observation du fond 7 de largeur délimitée par le volume 5 insonifié et le fond marin observé.

Le poisson 2 comporte sur bâbord un système d'observation symétrique de celui 3 et 4 de tribord destiné à insonifier un volume symétrique du volume 5 précédent par rapport au plan vertical passant par l'axe longitudinal 6 du poisson 2. Comme cet autre système d'observation est semblable aussi bien dans sa structure que dans son fonctionnement au système tribord 3 et 4 il ne sera pas décrit.

La largeur potentielle L' du champ de l'image, c'est-à-dire la largeur de la zone d'observation 7 quand le poisson 2 n'est pas soumis à des mouvements de rotation, est liée en partie aux dimensions des antennes d'émission 3 et de réception 4 ainsi qu'au nombre K de capteurs k de l'antenne de réception 4. Le nombre N de voies i formées est fonction de la résolution souhaitée et du "pire-cas" défini dans la solution de l'art antérieur. Contrairement à la solution de l'art antérieur où le nombre N de voies i formées et qui sont utilisées était variable et où les fonctions de stabilisation et de formation des voies i étaient distinctes, le procédé selon l'invention forme un nombre N de voies i constant et asservit les directions des voies i aux mouvements des antennes 3 et 4. De ce fait, tous les coefficients complexes, soient autant que le produit du nombre K de capteurs k par le nombre N de voies i, sont fournis par un calculateur de stabilisation 8 localisé à bord du bâtiment de surface 1.

Dans les figures suivantes, les éléments homologues à ceux utilisés dans la figure 1 sont désignés par les mêmes repères.

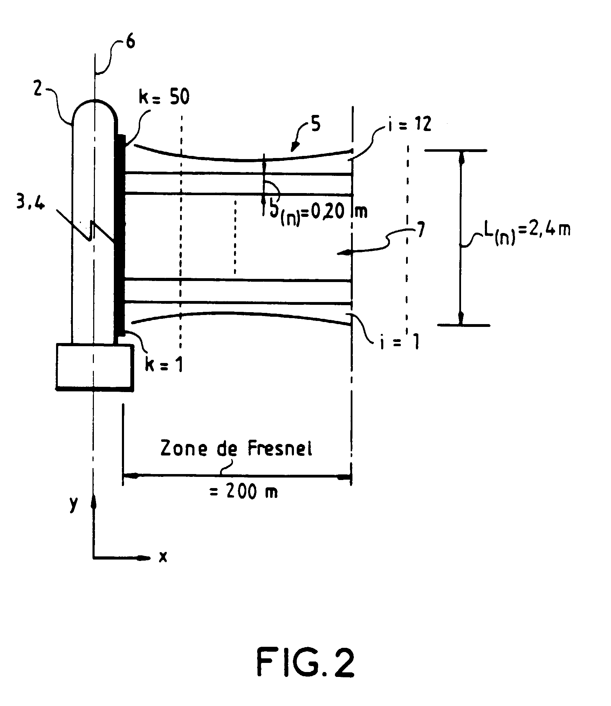

La figure 2 montre en vue de dessus un exemple de mode de réalisation du système d'observation 3 et 4 en fonctionnement porté par le poisson 2 de longueur 5 mètres. Les antennes émission 3 et réception 4 ont la même longueur égale à 3,20 mètres. L'antenne émission 3 insonifie un secteur large du volume 5 du fond marin. En champ proche, dans la zone de Fresnel suivant l'axe x, dans cet exemple de longueur égale à 200m, la largeur potentielle L' du champ est quasiment constante et égale à 2,4 mètres. L'antenne réception 4 à ouverture variable comporte K capteurs k, avec K = 50 par exemple, travaillant tous à la même fréquence de 400 Khz qui forment successivement par exemple N voies i, avec N = 12, dans le sens de navigation du poisson 2 en tenant compte du "pire-cas", ce qui permet d'obtenir pour la largeur L' de 2,4 mètres une largeur $\delta(n)$ de voie i égale à 0,20 mètre qui est la résolution suivant y. Le nombre de coefficients complexes à calculer dans cet exemple par le calculateur de stabilisation 8 est de 50 x 12 = 600 coefficients complexes.

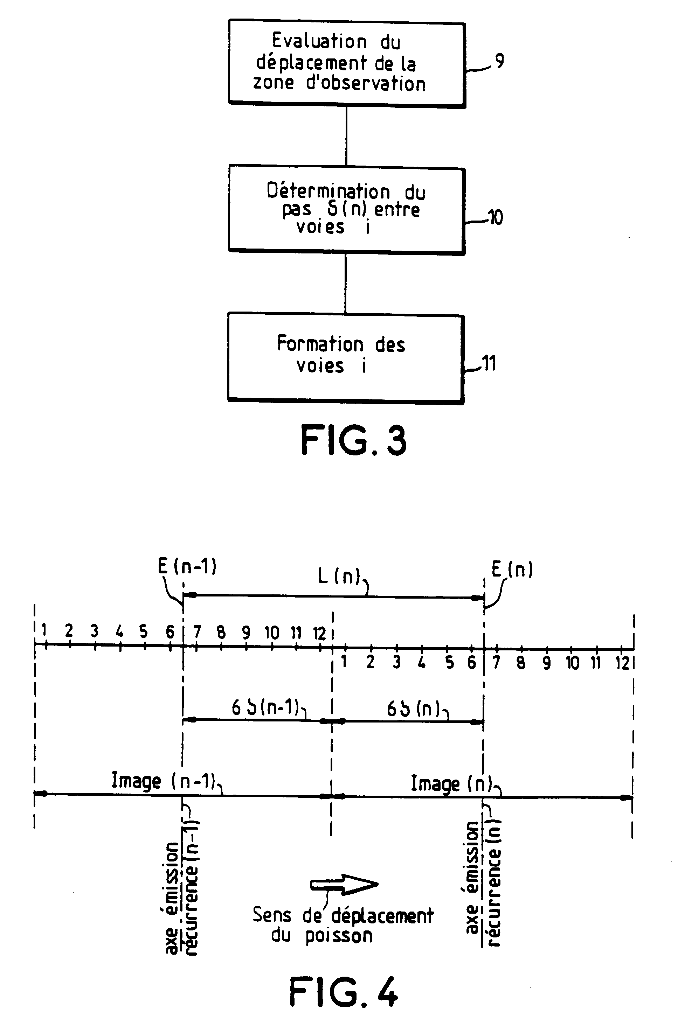

La figure 3 montre les trois étapes du procédé selon l'invention.

Le nombre N de voies i pour couvrir le champ d'une image étant préfixé, pour chaque récurrence d'ordre n :

- une première étape 9 consiste à évaluer le déplacement L(n) de la zone d'observation 7 du fond d'une récurrence en cours (n) en fonction du déplacement et de la position du poisson 2 par rapport à la zone d'observation 7 entre l'émission précédente E(n-1) et l'émission en cours E(n),

- une seconde étape 10 consiste à déterminer le pas $\delta_{(n)}$ entre voies i de réception pour obtenir une quasi-juxtaposition d'images successives du fond à partir du nombre N préfixé de voies i, du déplacement L(n) évalué dans la première étape et du pas $\delta(n-1)$ entre voies i de la récurrence précédente (n-1), et

- une troisième étape 11 consiste à repointer en temps réel la direction de l'axe de réception sur la direction de l'axe émission de la récurrence en cours (n) et à partir de cette direction, à former les N voies i de réception de largeur $\delta_{(n)}$ dépointées pour couvrir le champ de l'image de la récurrence en cours (n).

La figure 4, illustre la première étape 9 du procédé selon l'invention consistant à évaluer le déplacement L(n) par rapport au fond entre les deux axes émission successifs E(n-1) et E(n) compte tenu des divers paramètres de navigation du poisson 2.

Le déplacement L(n) est constitué d'une somme de trois termes liés aux mouvements du poisson 2 pendant une période de récurrence $T_R$. Le premier terme correspond à la vitesse longitudinale moyenne $V_R$ du poisson 2 par rapport à la zone d'observation du fond marin 7 ; le deuxième terme correspond au mouvement de lacet du poisson 2 et s'exprime en fonction de la vitesse moyenne $\lambda_R$ de lacet à la distance moyenne po de la zone d'observation du fond marin 7 et à une altitude H du poisson 2 par rapport au fond marin avec un signe déterminé S suivant bâbord ou tribord (respectivement -1 ou + 1) ; le troisième terme correspond au tangage du poisson 2 et s'exprime en fonction de la vitesse moyenne du tangage $\tau_R$ pour une altitude H du poisson 2 par rapport au fond. Les deux derniers termes viennent en fait modifier le déplacement lié uniquement à la vitesse longitudinale moyenne du poisson 2 par les écarts dus aux mouvements de rotation du poisson, lacet et tangage. Les paramètres de vitesses et de position du poisson 2 sont déterminés à partir d'un sonar Doppler, d'un sondeur et d'un gyromètre placés dans le poisson 2.

Les paramètres considérés pour déterminer le déplacement L(n) sont moyennés sur $T_R$, durée de la période de récurrence (280 ms).

Le déplacement est donc donné par la formule suivante :

$$L(n) = V_R T_R + \left( S\lambda_R\sqrt{\rho o^2 - H^2} + \tau_R . H \right) T_R \qquad (1)$$

Dans le mode de réalisation illustré sur la figure 4, 12 voies i sont formées pour couvrir le champ d'une image. Les voies i sont numérotées de i = 1 à i = 12 suivant le sens de navigation du poisson 2. Des traits courts verticaux surmontés des indices 1 à 12 correspondent respectivement aux axes centraux des voies i. Deux images successives jointives, respectivement Image (n-1) et Image (n), sont représentées : L'axe émission E(n-1) est l'axe de symétrie de l'image Image (n-1) situé entre la sixième et la septième voie i. De même l'axe d'émission E(n) est l'axe de symétrie de l'image Image (n).

Pour que les zones observées soient jointives, il faut que le déplacement, c'est-à-dire l'écart entre deux axes émission E(n-1) et E(n), soit égal à la somme de la largeur de la moitié du nombre N de voies i de la récurrence précédente (n-1) et de la largeur de la moitié du nombre N de voies i de la récurrence en cours (n). Soit :

$$L(n) = \frac{N}{2} \, \delta_{(n-1)} + \frac{N}{2} \, \delta_{(n)} \qquad\qquad (2)$$

Dans l'exemple représenté sur la figure 4, l'écart entre les axes d'émission E(n-1) et E(n) couvre ainsi les six voies i, 7 à 12, de l'image de la récurrence précédente (n-1) et les six voies, 1 à 6, de la récurrence en cours (n),

avec $\delta_{(n)}$ = pas entre voies i à la distance $\rho$o de la récurrence en cours (n)
$\delta_{(n-1)}$ = pas entre voies i de la récurrence précédente (n-1) à la distance $\rho$o

Dans la deuxième étape, le pas $\delta_{(n)}$ de la récurrence en cours est donc déduit du déplacement $L_{(n)}$ entre la récurrence précédente (n-1) et la récurrence en cours (n), et du pas de la récurrence précédente $\delta_{(n-1)}$.

La formule (2), si elle était utilisée telle quelle, pourrait conduire à des instabilités en cas de variation brusque de vitesse qui se traduirait par des déplacements très différents d'une période à la suivante.

En effet, la relation $\delta_{(n)} = \frac{2L(n)}{N} - \delta_{(n-1)}$ issue de (2) peut être assimilée à un filtre récursif discret.

Dans le domaine des transformées en Z, la fonction de transfert décrivant le filtre présente une instabilité avec un pôle en Z = -1 sur le cercle unité.

Pour éviter cette instabilité, il faut que le coefficient de $\delta_{(n-1)}$ soit inférieur à 1. Le pas $\delta_{(n)}$ est donc tel que :

$$\delta_{(n)} = \frac{2K}{N} \, L(n) - A\delta_{(n-1)}$$

où A et K sont des coefficients vérifiant que $K = \frac{1+A}{2}$ avec A < 1 ; condition qui assure que le pas de la récurrence en cours $\delta_{(n)}$ devient égal au pas de la récurrence précédente $\delta_{(n-1)}$ quand le nombre de périodes tend vers l'infini lorsque le déplacement L(n) ne varie pas. Les variations dues à des changements brutaux (à coups sur le câble tracteur etc...) du déplacement sont ainsi lissées et le pas entre voies i est stabilisé au bout d'un nombre restreint de récurrences.

Dans un mode de réalisation, K = 0,75 et A = 0,5.

De ce fait, les zones couvertes ne sont plus exactement jointives en cas de variation du déplacement et les erreurs peuvent se traduire soit par une petite superposition de deux zones observées consécutives, soit par un mini trou de couverture, qui ne sont pas préjudiciables au fonctionnement.

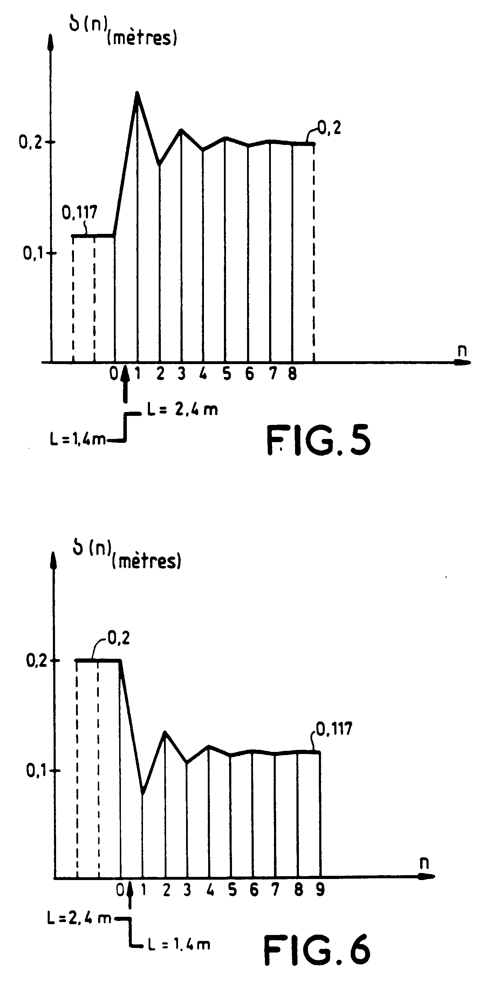

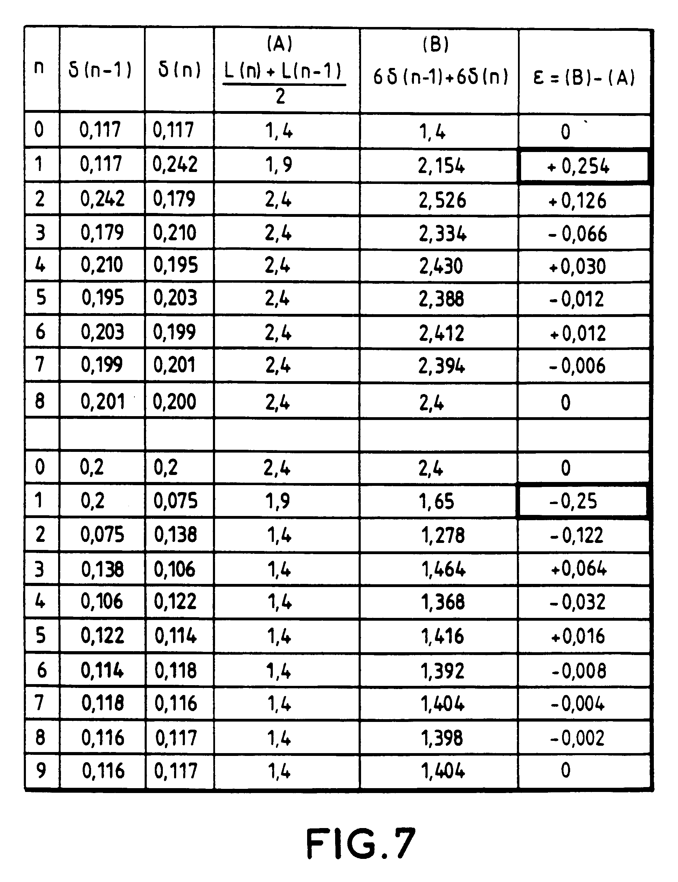

En effet, en supposant un cas extrême où le déplacement passe brusquement d'une récurrence à l'autre de L = 1,4 mètre à L = 2,4 mètres puis après quelques périodes de L = 2,4 mètres à L = 1,4 mètre, avec un nombre N de voies i formées égal à douze, le pas entre voies passe respectivement de $\delta$ = 0,117 mètre à $\delta$ = 0,2 mètre et de $\delta$ = 0,2 mètre à $\delta$ = 0,117 mètre. Les figures 5 et 6 illustrent respectivement les valeurs de pas $\delta_{(n)}$ entre voies i calculées aux périodes successives n = 1, 2, 3 ... respectivement pour les deux sauts précités. Ces valeurs sont également reportées dans le tableau de la figure 7 qui comporte également :

- la largeur correspondant à la demi-somme de deux déplacements consécutifs

$$(A) = \frac{L\,(n)\ + L\,(n\text{-}1)}{2} \, ,$$

- la largeur qui est effectivement couverte par deux demi-images consécutives (B ) = $6\delta_{(n)}$ + $6\delta_{(n-1)}$, et
- l'écart $\varepsilon$, différence entre la largeur effectivement couverte (B) et la largeur qui aurait du être couverte compte tenu des déplacements (A).

Cet écart se traduit par une superposition d'images consécutives pour $\varepsilon$ positif, et par un trou de couverture pour $\varepsilon$ négatif. Ce tableau montre une superposition atteignant au maximum 0, 254 m au passage de L = 1,4 m et L = 2,4m, et un trou de couverture atteignant au maximum 0,25 mètre au passage de L = 2,4m à L = 1,4m soit à peu près la largeur d'une voie qui est de 0,20 mètre lorsque la demi-somme des deux déplacements consécutifs passe à la valeur intermédiaire 1,9 m. Cet exemple (peu réaliste) permet de vérifier que même dans le cas extrême où le déplacement passe brusquement du simple au double, le trou de couverture, correspondant à environ 1/12 de la couverture totale du champ de l'image soit environ la largeur d'une voie, reste faible. Les images redeviennent parfaitement jointives au bout d'un nombre limité de récurrences égal à huit pour l'exemple du tableau.

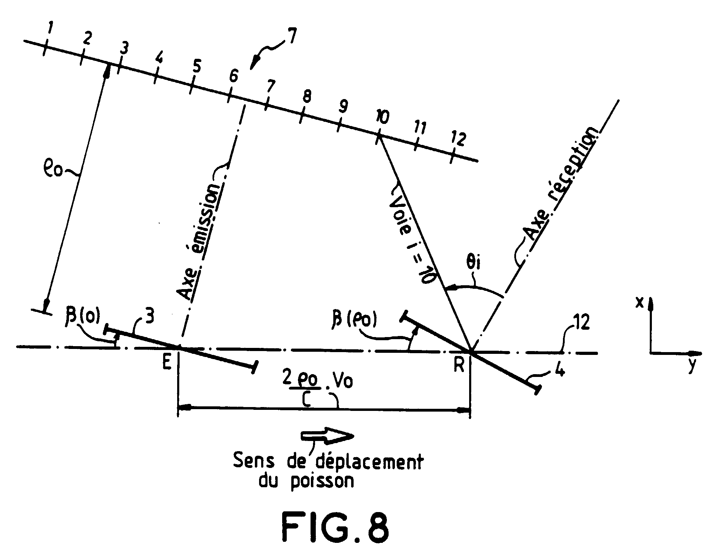

La figure 8 illustre schématiquement la troisième étape 11 du procédé selon l'invention, qui est l'étape de repointage de l'axe de réception et de formation des voies i de réception.

Sur cette figure, $\beta(o)$ est l'angle entre l'axe de l'antenne émission 3 et la trajectoire 12 du poisson 2 à un instant d'émission E, à la distance moyenne $\rho_o$,

$\beta(\rho_o)$ est l'angle fait par l'axe de l'antenne réception 4 à l'instant de réception R suivant l'instant d'émission E, traduisant une rotation du poisson 2 entre l'émission et la réception ; la distance parcourue par le poisson 2 entre les instants d'émission E et de réception R est donnée par le produit de la vitesse longitudinale moyenne $V_o$ du poisson 2 par rapport à la zone d'observation 7 du fond entre l'émission et la réception, par le temps de propagation de l'aller-retour du signal acoustique pour la distance $\rho_o$.

Soit $\frac{2\rho_o}{C} \cdot V_o$ avec C = célérité

L'étape 11 de formation des voies i couvrant le champ d'une image, consiste à repointer en temps réel l'axe réception sur l'axe émission au sein de la même récurrence (n), puis à partir de cet axe pris comme axe de symétrie, c'est-à-dire comme l'axe central de l'image, à former les voies i de réception.

L'angle de repointage donnant la direction de l'axe central, $\theta_{axe\ central}$, est constitué de la somme de trois termes liés, comme le déplacement L(n), aux vitesses longitudinale $V_R$, de lacet $\lambda_R$ et de tangage $\tau_R$ du poisson 2 entre l'émission et la réception et constitué plus précisément d'un premier terme considérant la vitesse longitudinale $V_o$, d'un second terme considérant la vitesse moyenne de lacet $\lambda_o$ à la distance po pour l'altitude H, et d'un troisième terme considérant la vitesse moyenne du tangage $\tau_o$, à la distance $\rho_o$ ; ces trois termes sont divisés par la célérité C du signal acoustique.

La direction de l'axe central est donnée par la formule suivante :

$$\theta_{axe\ central} = -\frac{2}{C}\left( Vo + S\lambda_o\sqrt{\rho_o{}^2 - H^2} + \tau_o H \right)$$

Les paramètres considérés sont moyennés sur l'intervalle de temps

$$\left[ 0, \frac{2\rho_o}{C} \right]$$

définissant l'intervalle de temps d'un aller-retour du signal acoustique.

Les voies i dépointées sont formées à partir de l'expression de l'angle $\theta_{axe\ central}$.

C'est à partir de l'angle $\theta_{axe\ central}$, du nombre N de voies i recouvrant le champ d'une image, et du pas $\delta_{(n)}$ entre voies i pour la distance de l'antenne émission 3 à la zone d'observation 7 pour une même récurrence que $\theta_i$, l'angle de dépointage de chaque voie i, est déterminé.

Pour N voies i, avec N = 12, couvrant le champ d'une image l'axe de symétrie de l'image se situe à la jonction de la sixième voie : i = 6 et la septième voie : i = 7, pour une même récurrence le pas étant de $\delta_{(n)}$ pour une distance $\rho_o$, l'axe central est situé pour i = 6,5.

Le dépointage d'une voie i est obtenu par la formule suivante :

$$\theta_i = (i - 6, 5)\frac{\delta_{(n)}}{\rho_o} + \theta_{axe\ central}$$

i est incrémenté de 1 à 12 dans le sens de navigation du poisson 2. L'exemple de la figure 5 montre schématiquement le dépointage d'une voie i où i = 10.

$\alpha_{i,k}$, le déphasage à appliquer au capteur k pour former la voie i est donné par la formule suivante :

$$\alpha_{i,k} = \frac{2\pi}{\lambda}\rho_o\left[ \sqrt{1 - \frac{2a_k\ \sin\theta_i}{\rho_o} + \left[\frac{a_k}{\rho_o}\right]^2} - 1 \right] + n_k$$

avec :

$\lambda$ = longueur d'onde
$a_k$ = abscisse du capteur k
$\theta_i$ = angle de dépointage de la voie i à la distance $\rho$o.
$n_k$ = correction de phase du capteur k mesurée en bassin.

Les 600 coefficients complexes (50x12) $\gamma_{i,k}$ nécessaires à la formation des voies i sont réactualisés aux distances $\rho_n$ et sont optimisés pour les distances

$$\rho_o = \frac{\rho_n + \rho_{n+1}}{2}$$

Ils s'écrivent sous la forme :

$$\gamma_{i,k} = p_k \, u_k \, e^{j\alpha(i,k)}$$

où $p_k$ est le coefficient de pondération en amplitude du capteur k.
Il est nul pour les capteurs k non actifs dans l'intervalle considéré

$$[\rho_n, \rho_{n+1}]$$

c'est-à-dire les capteurs k de l'antenne réception 4 qui ne sont pas utilisés pour la formation des voies i en réception. Les $u_k$, déterminés à partir des mesures en bassin faites sur l'antenne 4, corrigent les dispersions acoustiques en amplitude des capteurs.

Soient $S_k$ les signaux des capteurs k et $S_i$ les signaux des voies i, le traitement spatial effectué par un calculateur de stabilisation 8 consiste à la transformation :

$$S_i = \sum_{k=1}^{50} \gamma_{i,k} \cdot S_k$$

Le mouvement de translation transversal du poisson 2 n'intervient pas dans les équations de définition des directions $\theta_i$. Il s'agit d'une approximation satisfaisante lorsque cette translation, pendant la durée de la récurrence, est très inférieure à la longueur $[\rho_{n+1} - \rho_n]$ de l'intervalle de distance dans lequel les directions des voies sont constantes, soit environ 2,5 mètres. Il faut donc que la composante transversale de la vitesse satisfasse

$$V_t << \frac{2,5}{0,28} = 9 \text{ mètres / seconde}$$

Le mouvement de translation transversale introduit un décalage entre les lignes des images formées lors de deux récurrences successives.

Ce décalage n'est pas préjudiciable à la qualité de l'image tant qu'il est inférieur à la résolution en distance oblique soit :

$$V_t \le \frac{C}{2BT_R} = 0,13 \text{ mètres / seconde pour B = 20KHz}$$

avec $V_t$ module de la projection du vecteur vitesse sur le plan orthogonal à l'axe longitudinal 6 du poisson 2, et B la bande passante utilisée.

La présente invention n'est pas limitée au nombre N = 12 de voies i formées, au nombre K = 50 de capteurs k ni aux dimensions géométriques des antennes 3 et 4 décrites dans le mode de réalisation particulier de l'invention. Le pas $\delta_{(n)}$ peut être déterminé par une autre relation visant à absorber les variations brutales du déplacement L(n).

## Revendications

1. Procédé de stabilisation et de formation de voies d'un sonar multivoies comportant au moins un système (3, 4) de surveillance du fond marin fixé sur un porteur (2), le système (3, 4) comportant en outre une antenne émission (3) insonifiant un volume (5) du fond marin utilisée en champ proche dans la zone de Fresnel, et comportant une antenne réception (4) à ouverture variable formant des voies i jointives, caractérisé en ce qu'il consiste pour couvrir le fond marin observé par une séquence d'images de zones d'observation (7) quasi-jointives sur le fond, à former en réception un nombre N préfixé constant de voies i, ayant un pas δ variable d'une récurrence à l'autre en fonction des paramètres de navigation du porteur (2) et en ce qu'il consiste pour chaque récurrence :

   - dans une première étape (9), à évaluer le déplacement L(n) de la zone d'observation (7) du fond pour une récurrence en cours (n) en fonction du déplacement et de la position du porteur (2) par rapport à la zone d'observation (7) entre l'émission précédente E(n-1) et l'émission en cours E(n),
   - dans une seconde étape (10), à déterminer le pas $\delta_{(n)}$ entre voies i pour la récurrence en cours (n) à partir du nombre N préfixé de voies i, du déplacement L(n) évalué dans la première étape (9) et du pas $\delta_{(n-1)}$ entre voies i de la récurrence précédente (n-1), et
   - dans une troisième étape (11), à repointer en temps réel la direction de l'axe réception sur la direction de l'axe émission de la récurrence en cours (n) et, à partir de cette direction, à former successivement les N voies i de réception dépointées de largeur $\delta_{(n)}$ pour couvrir le champ de l'image de la récurrence en cours (n).

2. Procédé selon la revendication 1, caractérisé en ce que le nombre N préfixé de voies i formées pour couvrir le champ d'une image est choisi en fonction de la résolution souhaitée et d'un "pire cas" défini par les conditions les plus défavorables de navigation du porteur pendant une période de récurrence.

3. Procédé selon la revendication 2, caractérisé en ce qu'il consiste à exprimer le pas $\delta_{(n)}$ entre voies i de la récurrence en cours (n) en fonction du nombre N de voies i et du déplacement L(n) par la formule

$$\delta_{(n)} = \frac{2K}{N} \, L(n) - A\delta_{(n-1)}$$

où K et A sont des constantes telles que $K = \frac{1+A}{2}$, pour absorber les à-coups en imposant que lorsque le déplacement L(n) se maintient constant lors des récurrences successives, le pas $\delta_{(n)}$ reprenne sa valeur initiale au bout d'un nombre restreint de récurrences.

4. Procédé selon la revendication 3, caractérisé en ce qu'il consiste à ajouter successivement à l'angle $\theta_{axe}$ central de la direction de l'axe émission E(n), les angles $\theta_i$ des directions des voies i dépointées numérotées de 1 à N suivant le sens de navigation du porteur (2) pour former les voies i couvrant le champ de l'image de la récurrence en cours (n).

5. Sonar, pour la mise en oeuvre du procédé selon l'une quelconque des revendications 1 à 4, caractérisé en ce qu'il comporte deux systèmes (3, 4) d'observation du fond marin, identiques et symétriques par rapport à l'axe longitudinal du porteur (2), comportant chacun une antenne linéaire d'émission (3) et une antenne linéaire de réception (4) de même longueur positionnées sur une même génératrice du porteur (2), et en ce qu'il est couplé à un calculateur de stabilisation (8) situé à bord d'un bâtiment (1) remorqueur du porteur (2), le calulateur de stabilisation (8) formant en réception le nombre N de voies i, évaluant le déplacement L(n) de la zone d'observation (7) du fond pour une récurrence en cours (n) en fonction du déplacement et de la position du porteur (2) par rapport à la zone d'observation (7) entre l'émission précédente E(n-1) et l'émission en cours E(n), déterminant le pas $\delta_{(n)}$ entre voies i, repointant en temps réel la direction de l'axe de réception sur la direction de l'axe émission, et formant successivement les N voies i de réception dépointées de largeur $\delta_{(n)}$.

## Patentansprüche

1. Verfahren zur Stabilisierung und Kanalbildung eines Mehrkanalsonargeräts mit mindestens einem an einer Trägerkapsel (2) befestigten System (3, 4) zur Überwachung des Meeresbodens, das außerdem eine ein Volumen (5) über dem Meeresboden beschallende Sendeantenne (3), die im Nahfeld in der Fresnel-Zone verwendet wird, und eine Empfangsantenne (4) enthält, deren Öffnungswinkel variabel ist und die aneinander angrenzende Kanäle i bildet, dadurch gekennzeichnet, daß es für eine praktisch nahtlose Überdeckung des Meeresbodens durch eine Folge von Beobachtungszonen (7) beim Empfang eine vorgegebene konstante Anzahl N von Kanälen i mit einem variablen Abstand δ von einer Rekurrenzperiode zur anderen abhängig von Navigationsparametern der Kapsel (2) bildet und für jede Rekurrenzperiode folgende Schritte beinhaltet:

- in einem ersten Schritt (9) die Ermittlung der Verschiebung L(n) der Beobachtungszone (7) am Meeresboden für eine laufende Rekurrenzperiode (n) abhängig von der Verschiebung und der Lage der Kapsel (2) bezüglich der Beobachtungszone (7) zwischen der vorhergehenden Sendeachse (E(n-1)) und der laufenden Sendeachse (E(n)),

- in einem zweiten Schritt (10) die Bestimmung des Abstands δ(n) zwischen Kanälen i für die laufende Rekurrenzperiode (n) ausgehend von der vorgegebenen Anzahl N von Kanälen i, von der im ersten Schritt (9) ermittelten Verschiebung L(n) und vom Abstand δ(n-1) zwischen Kanälen i der vorhergehenden Rekurrenzperiode (n-1), und

- in einem dritten Schritt (11) eine Nachstellung der Richtung der Empfangsachse in Echtzeit auf die Richtung der Sendeachse der laufenden Rekurrenzperiode (n) und ausgehend von dieser Richtung die Bildung der aufeinanderfolgenden N nachgestellten Empfangskanäle i einer Breite δ(n), um das Bildfeld der laufenden Rekurrenzperiode (n) zu überdecken.

2. Verfahren nach Anspruch 1, dadurch gekennzeichnet, daß die vorgegebene Anzahl N von gebildeten Kanälen i zur Überdeckung des Bildfelds abhängig von der gewünschten Auflösung und von einem ungünstigsten Fall gewählt wird, der durch die ungünstigsten Navigationsbedingungen der Kapsel während einer Rekurrenzperiode definiert ist.

3. Verfahren nach Anspruch 2, dadurch gekennzeichnet, daß es darin besteht, den Abstand δ(n) zwischen Kanälen i der laufenden Rekurrenzperiode (n) abhängig von der Anzahl N von Kanälen i und der Verschiebung L(n) durch die folgende Formel ausgedrückt wird:

$$\delta_{(n)} = \frac{2K}{N}\, L(n) - A\delta_{(n-1)}$$

wobei K und A Konstante sind, für die gilt K = (1+A)/2, um die stoßartigen Bewegungen zu absorbieren, so daß, wenn die Verschiebung L(n) in aufeinanderfolgenden Rekurrenzperioden konstant bleibt, der Abstand δ(n) seinen ursprünglichen Wert nach einer beschränkten Anzahl von Rekurrenzperioden wieder erreicht.

4. Verfahren nach Anspruch 3, dadurch gekennzeichnet, daß es darin besteht, nacheinander zum Winkel $\Theta_{ZA}$ der zentralen Achse der Richtung der Sendeachse E(n) die Winkel $\Theta_i$ der Richtungen der nachgestellten Kanäle i von 1 bis N gemäß der Navigationsrichtung der Kapsel (2) hinzuzufügen, um die Kanäle i zu bilden, die das Bildfeld der laufenden Rekurrenzperiode (n) überdecken.

5. Sonargerät für die Durchführung des Verfahren nach einem beliebigen der Ansprüche 1 bis 4, dadurch gekennzeichnet, daß es zwei Systeme (3, 4) zur Beobachtung des Meeresgrunds besitzt, die identisch und symmetrisch bezüglich der Längsachse der Trägerkapsel (2) angeordnet sind und je eine lineare Sendeantenne (3) und eine lineare Empfangsantenne (4) gleicher Länge besitzen, die auf einer gemeinsamen Mantellinie der Kapsel (2) sitzen, und daß das Sonargerät mit einem Stabilisierungsrechner (8) gekoppelt ist, der sich auf einem die Kapsel (2) hinter sich her schleppenden Schiff (1) befindet, wobei der Stabilisierungsrechner (8) beim Empfang die N Kanäle i bildet, die Verschiebung L(n) der Beobachtungszone (7) am Meeresgrund für eine laufende Rekurrenzperiode (n) abhängig von der Verschiebung der Lage der Kapsel (2) bezüglich der vorhergehenden Sendeachse E(n-1) und der laufenden Sendeachse E(n) ermittelt, sowie den Abstand δ(n) zwischen Kanälen i bestimmt und in Echtzeit die Richtung der Empfangsachse auf die Richtung der Sendeachse nachstellt und nacheinander die N nachgestellten Empfangskanäle i einer Breite δ(n) bildet.

## Claims

1. Stabilization and channel-formation method for a multichannel sonar including at least one sea bottom surveillance system (3, 4) fixed on a carrier (2), the system (3, 4) furthermore including a transmitting antenna (3) insonifying a volume (5) of the sea bottom and used in the near field within the Fresnel region, and including a variable-aperture receiving antenna (4) forming adjoining channels i, characterized in that, in order to cover the sea bottom observed through a sequence of images of almost-adjoining observation regions (7) on the bottom, it consists in forming on reception a constant preset number N of channels i, having a variable spacing $\delta$ from one repetition to another dependent on the navigational parameters of the carrier (2) and in that, for each repetition, it consists in:

- within a first step (9), evaluating the movement L(n) of the bottom-observation region (7) for a current repetition (n) as a function of the movement and position of the carrier (2) relative to the observation region (7) between the previous transmission E(n-1) and the current transmission E(n),
- within a second step (10), determining the spacing $\delta_{(n)}$ between channels i for the current repetition (n) from the preset number N of channels i, from the movement L(n) evaluated in the first step (9) and from the spacing $\delta_{(n-1)}$ between channels i of the previous repetition (n-1), and
- within a third step (11), realigning in real time the direction of the reception axis with the direction of the transmission axis for the current repetition (n) and, on the basis of this direction, successively forming the N misaligned reception channels i of width $\delta_{(n)}$ so as to cover the field of the image of the current repetition (n).

2. Method according to Claim 1, characterized in that the preset number N of channels i formed to cover the field of an image is chosen as a function of the desired resolution and of a "worst case" defined by the most unfavourable conditions of navigation of the carrier in a repetition period.

3. Method according to Claim 2, characterized in that it consists in expressing the spacing $\delta_{(n)}$ between channels i of the current repetition (n) as a function of the number N of channels i and of the movement L(n) through the formula

$$\delta_{(n)} = \frac{2K}{N} L(n) - A\delta_{(n-1)}$$

where K and A are constants such that $K = \frac{1+A}{2}$, so as to absorb the jerks by requiring that when the movement L(n) is kept constant during the successive repetitions, the spacing $\delta_{(n)}$ reverts to its initial value after a smallish number of repetitions.

4. Method according to Claim 3, characterized in that it consists in adding successively to the angle $\theta_{central\ axis}$ of the direction of the transmission axis E(n), the angles $\theta_i$ of the directions of the misaligned channels i numbered from 1 to N along the direction of travel of the carrier (2) so as to form the channels i covering the field of the image of the current repetition (n).

5. Sonar for the implementation of the method according to any one of Claims 1 to 4, characterized in that it includes two identical sea bottom observation systems (3, 4) which are symmetric with respect to the longitudinal axis of the carrier (2) each including a linear transmitting antenna (3) and a linear receiving antenna (4) of the same length and which are positioned on the same generatrix of the carrier (2), and in that it is coupled to a stabilization computer (8) located on board a ship (1) towing the carrier (2), the stabilization computer (8) forming on reception the number N of channels i, evaluating the movement L(n) of the bottom-observation region (7) for a current repetition (n) as a function of the movement and position of the carrier (2) relative to the observation region (7) between the previous transmission E(n-1) and the current transmission E(n), determining the spacing $\delta_{(n)}$ between channels i, realigning in real time the direction of the reception axis with the direction of the transmission axis, and successively forming the N misaligned reception channels i of width $\delta_{(n)}$.

FIG.1

EP 0 628 172 B1

FIG.2

Evaluation du
déplacement de la
zone d'observation — 9

Détermination du
pas S(n) entre
voies i — 10

Formation des
voies i — 11

# FIG. 3

E(n-1)          L(n)          E(n)

1  2  3  4  5  6  7  8  9  10  11  12

1  2  3  4  5  6  7  8  9  10  11  12

6 S(n-1)          6 S(n)

Image (n-1)          Image (n)

axe émission
récurrence (n-1)

axe émission
récurrence (n)

Sens de déplacement
du poisson

# FIG. 4

FIG.5

FIG.6

| $n$ | $\delta(n-1)$ | $\delta(n)$ | (A) $\dfrac{L(n)+L(n-1)}{2}$ | (B) $6\delta(n-1)+6\delta(n)$ | $\varepsilon = (B)-(A)$ |
|---|---|---|---|---|---|
| 0 | 0,117 | 0,117 | 1,4 | 1,4 | 0 |
| 1 | 0,117 | 0,242 | 1,9 | 2,154 | + 0,254 |
| 2 | 0,242 | 0,179 | 2,4 | 2,526 | + 0,126 |
| 3 | 0,179 | 0,210 | 2,4 | 2,334 | − 0,066 |
| 4 | 0,210 | 0,195 | 2,4 | 2,430 | + 0,030 |
| 5 | 0,195 | 0,203 | 2,4 | 2,388 | − 0,012 |
| 6 | 0,203 | 0,199 | 2,4 | 2,412 | + 0,012 |
| 7 | 0,199 | 0,201 | 2,4 | 2,394 | − 0,006 |
| 8 | 0,201 | 0,200 | 2,4 | 2,4 | 0 |
|  |  |  |  |  |  |
| 0 | 0,2 | 0,2 | 2,4 | 2,4 | 0 |
| 1 | 0,2 | 0,075 | 1,9 | 1,65 | − 0,25 |
| 2 | 0,075 | 0,138 | 1,4 | 1,278 | − 0,122 |
| 3 | 0,138 | 0,106 | 1,4 | 1,464 | + 0,064 |
| 4 | 0,106 | 0,122 | 1,4 | 1,368 | − 0,032 |
| 5 | 0,122 | 0,114 | 1,4 | 1,416 | + 0,016 |
| 6 | 0,114 | 0,118 | 1,4 | 1,392 | − 0,008 |
| 7 | 0,118 | 0,116 | 1,4 | 1,404 | − 0,004 |
| 8 | 0,116 | 0,117 | 1,4 | 1,398 | − 0,002 |
| 9 | 0,116 | 0,117 | 1,4 | 1,404 | 0 |

# FIG.7

FIG.8